Europäisches Patentamt

European Patent Office

Office européen des brevets

(19)

(11) Publication number: **0 260 368**
**A1**

(12) # EUROPEAN PATENT APPLICATION

(21) Application number: 86850315.2

(22) Date of filing: 17.09.86

(51) Int. Cl.⁴: **F16H 25/22** , F16H 25/24

(43) Date of publication of application:
23.03.88 Bulletin 88/12

(84) Designated Contracting States:
AT BE DE FR GB IT NL SE

(71) Applicant: ORIGA FÖRVALTNINGS AB
Kungsgatan 61
S-736 00 Kungsör(SE)

(72) Inventor: Granbom, Bo
Södergatan 5
S-736 00 Kungsör(SE)
Inventor: Olsson, Anders
Backa-Rinkaby
S-710 23 Glanshammar(SE)

(74) Representative: Onn, Thorsten et al
AB STOCKHOLMS PATENTBYRA Box 3129
S-103 62 Stockholm(SE)

(54) **A device for converting a rotary motion into a linear one.**

(57) A device for converting a rotary motion into a linear one comprising a first, elongate body (1) provided with bars and grooves (2) extending along the body and a second body (3) rotatable coaxially relative to the first body. The device is characterized in that a third, annular body (10) is arranged to engage a portion of the bars and grooves (2) of the first body (1) by grooves and cams and that the third body (10) is rotatable and axially non-rotatably mounted in the second body (3).

FIG.1

EP 0 260 368 A1

## A device for converting a rotary motion into a linear one

This invention relates to a device for converting a rotary motion into a linear one, as indicated in the preamble of claim 1.

Different devices of this kind are known using freely rotatable wheels or rolls mounted in one of the members displaceable relative to each other, ribs or cams of said rolls coacting with the threads of the other member. By turning one member the rolls will roll with the cams in engagement with the threads and consequently displace the other member. The ribs or cams of the rolls can be parallel, lying in planes extending perpendicularly to the roll axis, or form threads corresponding to the threads of the threaded member.

There are different solutions for ensuring an exact guide of the rolls relative to each other and preventing these from skidding or being locked resulting in an uneven and unsafe operation of the device. One of these solutions means that the threaded member, e.g. the spindle, is provided with teeth throughout its length engaging the corresponding teeth of the rolls. These will then be constantly adapted exactly relative to each other in the operation of the device. This type of devices is known e.g. from Swedish Application No. 8401481-0.

Even if these devices have been found to operate extremely efficiently and have solved the problems associated with devices of this type of the previous generation, certain disadvantages, however, remain even with these devices provided with teeth. At mounting a relatively time-consuming, manual contribution is required which makes the device more expensive, and the known device has also the disadvantage that it gives a relatively high noise.

E.g. DE B 23 27 213 discloses a device embodied to solve said problems. The device has three rings - roll rings - provided with grooves coacting with the threaded spindle. These rings have an inside diameter larger than the maximum diameter of the spindle, and the rings will in this way roll off relative to the spindle. Even if several of the above-mentioned problems are solved by means of this device the problem will arise to control or mount these rings in the nut in a reliable way and with a silent operation, and the solution of this is three rings and rolls holding the relative ring pressed against the spindle by a certain force. In spite of the use of three rings which makes manufacture and mounting more expensive, a loud and not quite even and satisfactory run of the device is obtained.

Thus, one object of this invention is to improve further a device of the type intended here and to make it more efficient which has been achieved by providing the invention with the characteristic features defined in the claims. By means of these features mounting will be simple simultaneously as the device is very silent in operation.

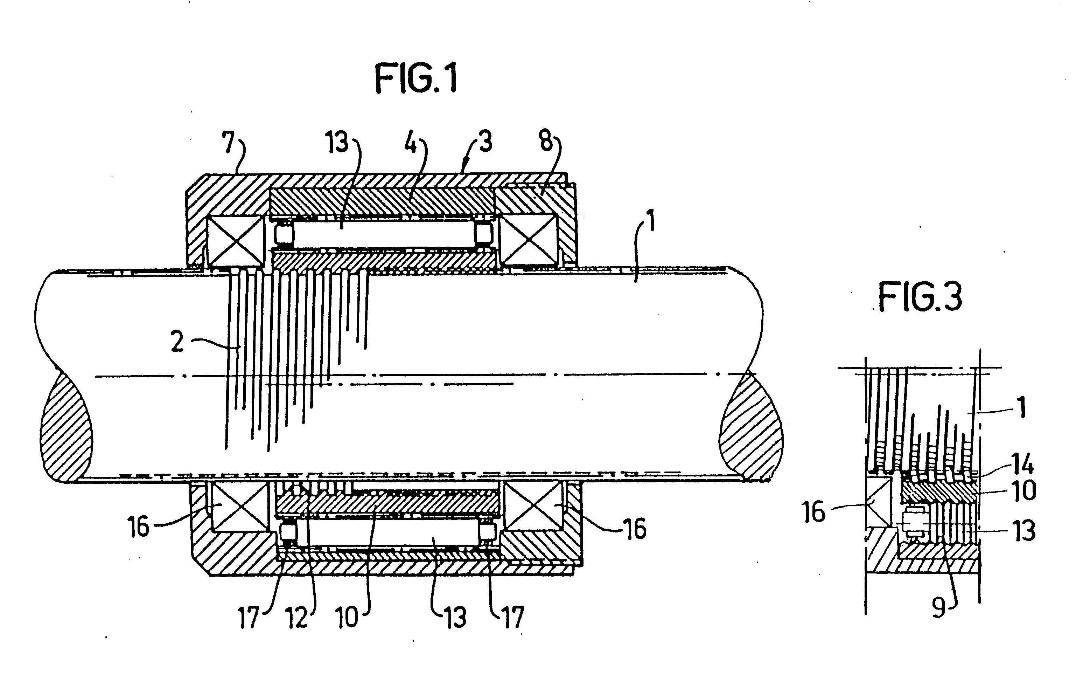

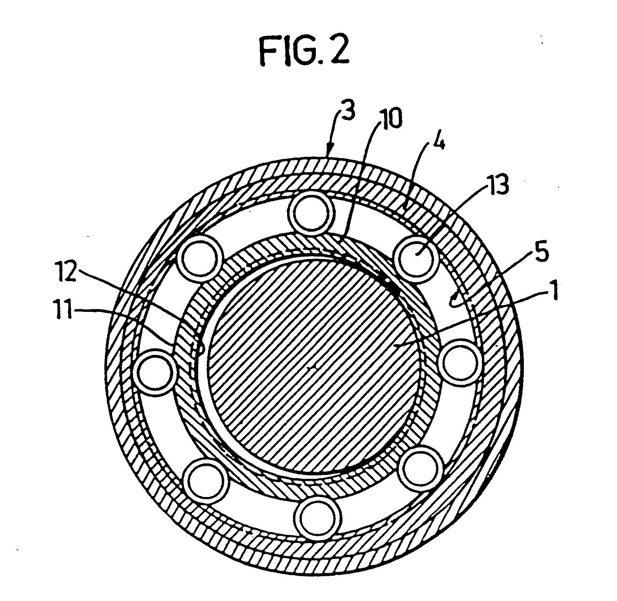

The invention will be described in greater detail in the form of examples with reference to the drawing, in which Fig. 1 shows schematically a partial section of the device of the invention, Fig. 2 is a view as seen in the direction of the arrows II-II in Fig. 1, and Fig. 3 shows a detail in another embodiment of the invention.

As indicated the figures show only the very inventive idea in detail while the rest of the machine element, in which the invention is included, is omitted. In general it can be said that this consists of a threaded screw mounted in suitable manner and driven e.g. by an electric motor. A housing for supporting the rolls co-acting with the threaded screw can be associa ted with an axially movable sleeve surrounding the screw. Of course the housing or sleeve can instead be driven by an electric motor e.g. via a gear, the housing or sleeve moving axially along the screw at non-rotating screw.

In the figures 1 designates a screw or spindle provided with threads 2. A housing 3 surrounds the screw 1 concentrically and is mounted and guided relative to this by means of bearings 16 at each end of the housing. The housing 3 has a ring or lining 4 provided with a track 5 eccentric relative to the screw 1. The ring 4 is held together by the housing 3 in suitable manner, and is for instance clamped between a shoulder 6 of a sleeve 7 and a socket 8 threaded at the sleeve 7. As apparent from Fig. 1 the interior bearing surfaces of the bearings thus slide directly against the crest portions of the screw 1. 17 designates roll carriers intended to maintain the mutual angular positions of the rolls in the operation of the device.

The track 5 is formed by a number of parallel ribs 9 extending transversely to the axis of the track. Inside of the ring 4 with the track 5 a further third ring 10 is arranged, the inside diameter of which is somewhat greater than the maximum diameter of the screw 1. On its outside the ring 10 is provided with peripherically extending ribs 11 corresponding to the ribs of the track 5. The inside of the ring 10 is provided with grooves and cams 12, the profile of which corresponds to the thread profile of the screw 1. The ring 10 is guided concentrically and rotatably with its associated track 5 by means of eight rolls 13 shown in the example, the mantle surfaces of which have grooves corresponding to the ribs of the track 5 and the ribs 11, the ring 4 and the rolls 13 being axially non-rotatable relative to each other.

In view of the fact that the cams 12 of the ring 10 are arranged parallelly to each other and perpendicularly to the axis of the ring and the spindle and consequently form an angle with the threads 2 of the spindle the cam profile must be made more narrow in a corresponding way. This can be avoided by "inclining" the surface of the ring 10 provided with cams so that the extension of the cams 12 coincides with the inclination of the threads 12 in the portion of engagement.

In another embodiment, Fig. 3, the ring 10 can be provided with threads 14 instead of the cams 12, the profile of which corresponds to the threads 2 of the screw 1. The gear change of the device can be varied in dependence of the pitch of this thread. It can be said that the pitch corresponds to 0 in Fig. 1. Moreover, the screw 1 can be provided with teeth throughout its length in the thread bottoms coacting with the corresponding teeth arranged in the tops of the threads of the ring 10. In this way sliding between a ring 10 and the screw 1 is prevented which might lead to an erroneous function of the device in case the pitch deviates from 0.

As mentioned in the introductory portion a device is achieved through the invention which has a very silent run in comparison with motion transferring mechanisms known so far of the type intended here. At the same time mounting is simplified because the ring or the lining 4, the rolls 13 and the ring 10 can be assembled to one unit before this is quite simply threaded onto the spindle 1.

It is to be understood that it is possible within the scope of the invention to vary the different components and, thus, the spindle can be made as a pipe with an internal thread and the housing 3 supporting the tracks 5 on the outside can be active within this spindle. As it easily realized by one skilled in the art the rings corresponding to the described rings 10 will then engage the inside of the spindle - pipe - by parts of their outsides. As before, the rolls will then be located between these rings and said tracks.

Another embodiment within the scope of the invention comprises a spindle which instead of threads 2 is provided with mutually parallel bars or grooves extending peripherically and perpendicularly to the spindle axis. The ring 10 will then have internal threads corresponding to the profiles of the bars and grooves. Otherwise the device can be formed as previously described apart from the fact that the no teeth 15 will be necessary. This embodiment is especially suitable for use in connection with lifts, the spindle being stationary and the nut received in the lift-cage being rotated.

The very housing 3 consisting of a sleeve 7 and a socket 8 threaded at this in the example has, as mentioned, slide bearings 16 arranged concentrically around the screw or spindle 1 on each side of the ring 10. Instead of slide bearings it is possible to use ball or roller bearings, the internal bearing ring of which is guided against the spindle 1.

## Claims

1. A device for converting a rotary motion into a linear one comprising a first, elongate body (1) provided with bars and grooves (2) extending along the body and a second body (3) rotatable coaxially relative to the first body, **characterized** in that the device comprises a third, annular body (10) arranged to engage a portion of the bars and grooves (2) of the first body (1) by grooves and cams (12), that the third body (10) is mounted rotatably and axially non-rotatably in the second body (3) and that the second body (3) has slide bearings (16) embracing the first elongate body (1).

2. The device of claim 1, **characterized** in that the third body (10) is arranged to be rotatably and axially non-rotatably mounted in the second body (3) by means of a number of rolls (13) arranged between the second and the third body and provided with parallelly extending grooves arranged along the periphery and cooperating with ribs (9, 11) arranged in the second (3) and third (10) body.

3. The device of any one of the preceding claims, **characterized** in that the grooves and cams (12) of the third body (10) extend parallelly to each other.

4. The device of claim 3, **characterized** in that the grooves and cams (12) are arranged to extend parallelly to the bars and grooves (2) of the first body (1).

5. The device of any one of claims 1 or 2, **characterized** in that the grooves and cams (12) of the third body (10) have the shape of a thread.

6. The device of any one of the preceding claims, **characterized** in that the bars and grooves of the first body (1) have the shape of threads (2).

7. The device of claim 5, **characterized** in that the bars and grooves of the first body (1) are arranged parallelly to each other and perpendicularly to the axis of the body (1).

8. The device of any one of the preceding claims, **characterized** in that the first body (1) has the shape of a spindle and that the grooves and cams (12) are arranged on the inside of the third, annular body (10), the diameter between the peaks of the cams only being somewhat greater than the diameter between the peaks of the bars of the spindle (1).

9. The device of any one of claims 6-9, **characterized** in that the first body (1) has teeth in addition to the bars and grooves, said teeth coacting with teeth arranged in the third, annular body (10).

# FIG.1

# FIG.3

0 260 368

# FIG.2

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | US-A-3 730 016 (MILLER)<br><br>* Column 4, lines 31-50; figure 4 * | 1,5,6,<br>8,9 | F 16 H 25/22<br>F 16 H 25/24 |
| Y | | 2-4,7 | |
| | --- | | |
| D,Y | DE-A-2 327 213 (LUHMANN GERHARD)<br>* Pages 4-5; figures 3-4 * | 2-4 | |
| | --- | | |
| Y | DE-A-1 927 767 (UHING JOACHIM)<br>* Page 3, lines 17-18; figure 2 * | 7 | |
| | ----- | | |

TECHNICAL FIELDS
SEARCHED (Int. Cl.4)

F 16 H

The present search report has been drawn up for all claims

| Place of search | Date of completion of the search | Examiner |
|---|---|---|
| THE HAGUE | 18-05-1987 | BEERNAERT J.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82